(19) **Europäisches Patentamt / European Patent Office / Office européen des brevets**

(11) **EP 3 620 970 B1**

(12) **FASCICULE DE BREVET EUROPEEN**

(45) Date de publication et mention de la délivrance du brevet:
**27.10.2021 Bulletin 2021/43**

(21) Numéro de dépôt: **19195806.5**

(22) Date de dépôt: **06.09.2019**

(51) Int Cl.:
*G06K 9/00* (2006.01)    *G06K 9/62* (2006.01)

(54) **PROCÉDÉ D'EXTRACTION DE CARACTÉRISTIQUES D'UNE EMPREINTE DIGITALE REPRÉSENTÉE PAR UNE IMAGE D'ENTRÉE**

VERFAHREN ZUR EXTRAKTION VON MERKMALEN EINES FINGERABDRUCKS, DER DURCH EIN EINGANGSBILD DARGESTELLT WIRD

METHOD FOR EXTRACTING CHARACTERISTICS OF A FINGERPRINT REPRESENTED BY AN INPUT IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2018 FR 1858004**

(43) Date de publication de la demande:
**11.03.2020 Bulletin 2020/11**

(73) Titulaire: **Idemia Identity & Security France
92400 Courbevoie (FR)**

(72) Inventeurs:
- **CAZASNOVES, Anthony
  92400 Courbevoie (FR)**
- **THUILLIER, Cédric
  92400 Courbevoie (FR)**

(74) Mandataire: **Regimbeau
20, rue de Chazelles
75847 Paris Cedex 17 (FR)**

(56) Documents cités:
- JIAN LI ET AL: "Deep convolutional neural network for latent fingerprint enhancement", SIGNAL PROCESSING. IMAGE COMMUNICATION., vol. 60, 1 février 2018 (2018-02-01), pages 52-63, XP055590662, NL ISSN: 0923-5965, DOI: 10.1016/j.image.2017.08.010
- Liang-Chieh Chen ET AL: "Rethinking Atrous Convolution for Semantic Image Segmentation", , 17 juin 2017 (2017-06-17), XP055558070, Extrait de l'Internet: URL:https://arxiv.org/pdf/1706.05587v1.pdf [extrait le 2019-05-21]
- CHRISTIAN SZEGEDY ET AL: "Going deeper with convolutions", 2015 IEEE CONFERENCE ON COMPUTER VISION AND PATTERN RECOGNITION (CVPR), 1 juin 2015 (2015-06-01), pages 1-9, XP055536247, DOI: 10.1109/CVPR.2015.7298594 ISBN: 978-1-4673-6964-0
- TENSMEYER CHRIS ET AL: "Document Image Binarization with Fully Convolutional Neural Networks", 2017 14TH IAPR INTERNATIONAL CONFERENCE ON DOCUMENT ANALYSIS AND RECOGNITION (ICDAR), IEEE, vol. 1, 9 novembre 2017 (2017-11-09), pages 99-104, XP033307794, DOI: 10.1109/ICDAR.2017.25

**Description**

DOMAINE TECHNIQUE GENERAL

La présente invention concerne le domaine de la biométrie, et propose en particulier un procédé d'extraction de caractéristiques recherchées d'une empreinte digitale représentée par une image d'entrée, en vue d'un traitement biométrique de l'image d'entrée.

ETAT DE L'ART

L'authentification/identification biométrique consiste à reconnaitre un individu sur la base de traits biométriques de cet individu tels que les empreintes digitales (reconnaissance digitale), l'iris ou le visage (reconnaissance faciale).
Les approches biométriques classiques utilisent les informations caractéristiques du trait biométrique extraites à partir de la biométrie acquise, appelées « features », et l'apprentissage/classification est réalisé sur la base de la comparaison de ces caractéristiques.
En particulier, dans le cas de la reconnaissance digitale, les images d'extrémité de doigt sont traitées de sorte à extraire les caractéristiques d'une empreinte qui peuvent être classées en trois catégories :

- Le niveau 1 définit le motif général de cette empreinte (une des quatre classes : boucle à droite, boucle à gauche, arche et spirale), et le tracé global des crètes (on obtient en particulier une carte d'orientation dite « Ridge Flow Matrix », carte RFM, qui représente en chaque point de l'empreinte la direction générale de la crête).
- Le niveau 2 définit les points particuliers des empreintes appelés minuties, qui constituent des « événements » le long des crètes (fin d'une crète, bifurcation, etc.). Les approches classiques de reconnaissance utilisent essentiellement ces caractéristiques.
- Le niveau 3 définit des informations plus complexes telles que la forme des crètes, les pores de la peau, des cicatrices, etc.

On appelle ainsi un « codage » le procédé d'extraction des caractéristiques d'une empreinte (sous la forme de cartes de caractéristiques, ou « feature maps »), lesquelles permettent de composer une signature appelée « template » encodant l'information utile à la phase finale de classification. Plus précisément, on va réaliser la classification par comparaison des cartes de caractéristiques obtenues avec une ou plusieurs carte(s) de caractéristiques de référence associée(s) à des individus connus.
On dispose aujourd'hui de « codeurs » réalisant efficacement cette opération d'extraction de caractéristiques, i.e. d'algorithmes procédant à un ensemble de traitements :

- Amélioration de l'image (rehaussement de contraste, réduction du bruit, etc.) ;
- Utilisation de filtre dédiés (Gabor de différentes résolution, dérivateurs, etc.) ;
- Utilisation de méthode de décisions (seuillage de binarisation, extraction de points, etc.)

Cependant, on cherche maintenant à embarquer de tels codeurs sur des équipements grand public tels que des smartphones, très contraignants en termes de performances, alors que la chaîne de traitement ci-dessus nécessite de fortes puissances de calcul et ressources mémoires. En effet, jusque là la reconnaissance d'empreinte digitale était essentiellement mise en œuvre sur des bornes d'accès fixes, disposant de moyens de traitement dédiés.
Une piste est l'utilisation de réseaux de neurones, lesquels sont déjà massivement utilisés pour la classification de données.
Après une phase d'apprentissage automatique (généralement supervisé, c'est-à-dire sur une base de données de référence déjà classifiées), un réseau de neurones « apprend » et devient tout seul capable d'appliquer la même classification à des données inconnues.
Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).
Et, dans le domaine de l'authentification/identification biométrique, un CNN peut être entraîné à reconnaitre un individu sur la base de traits biométriques de cet individu dans la mesure où ces données sont manipulées sous formes d'images.
Dans "Deep convolutional neural network for latent fingerprint enhancement" par Jian Li et al. (SIGNAL PROCESSING. IMAGE COMMUNICATION., vol. 60, 1 février 2018, pages 52-63, XP055590662,NL, ISSN: 0923-5965), un procédé de pré-traitement est appliqué à des images d'empreintes digitales, ce procédé utilise des CNN pour améliorer l'extraction de caractéristiques. Si de telles approches ont permis des avancées majeures par exemple en reconnaissance de visages, leur application à la reconnaissance d'empreinte digitales se heurte aux spécificités inhérentes aux empreintes digitales et les performances n'ont jusqu'à ce jour pas été convaincantes. De surcroît, la taille du réseau de neurones doit demeurer limitée afin de pouvoir répondre aux contraintes de mémoire des équipements grand public susmentionnés.

Il serait par conséquent souhaitable de disposer d'une solution plus légère d'extraction de caractéristiques d'une empreinte digitale, qui soit néanmoins au moins aussi performante que les solutions existantes.

## PRESENTATION DE L'INVENTION

Selon un premier aspect, la présente invention concerne un procédé d'extraction de caractéristiques recherchées d'une empreinte digitale représentée par une image d'entrée, le procédé étant défini par la revendication 1.

D'autres caractéristiques avantageuses sont définies par les revendications 1-13.

Selon un deuxième et un troisième aspect, l'invention propose un produit programme d'ordinateur comprenant des instructions de code pour l'exécution d'un procédé selon le premier aspect d'extraction de caractéristiques recherchées d'une empreinte digitale représentée par une image d'entrée ; et un moyen de stockage lisible par un équipement informatique sur lequel un produit programme d'ordinateur comprend des instructions de code pour l'exécution d'un procédé selon le premier aspect d'extraction de caractéristiques recherchées d'une empreinte digitale représentée par une image d'entrée.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre des procédés selon l'invention ;
- la figure 2 représente une première possibilité de réseau de neurones à convolution ;
- la figure 3 représente un exemple de bloc de décompaction utilisé dans des modes de réalisations du procédé selon l'invention ;
- la figure 4 illustre des exemples de convolutions de type Atrous ;
- la figure 5 représente un exemple de bloc Inception utilisé dans des modes de réalisations du procédé selon l'invention ;
- la figure 6 représente un exemple de réseau de neurones à convolution pour la mise en œuvre du procédé selon l'invention.

## DESCRIPTION DETAILLEE

*Principe et architecture*

Le présent procédé propose un procédé d'extraction de caractéristiques recherchées d'une empreinte digitale représentée par une image d'entrée. Ce procédé consiste typiquement en un « codage » de l'empreinte, i.e. lesdites caractéristiques recherchées à extraire sont typiquement des caractéristiques « biométriques », c'est-à-dire les caractéristiques « finales » permettant de composer un template de l'empreinte digitale en vue de faire de classification (identification/authentification d'individu, voir plus loin). A ce titre lesdites caractéristiques recherchées décrivent typiquement des minuties, c'est-à-dire qu'elles comprennent la position et/ou l'orientation des minuties. Toutefois, on comprendra que le présent procédé n'est pas limitée à ce mode de réalisation, et toutes les caractéristiques possiblement d'intérêt en biométrie peuvent être extraites à l'issue de ce procédé.

Le présent procédé se distingue en ce qu'il propose une étape (a) de binarisation de ladite image d'entrée au moyen d'un réseau de neurones à convolution, CNN, de sorte à générer une image dite binaire. En effet, alors que l'image d'entrée est en couleur ou typiquement en niveau de gris, l'image binaire n'est constituée que de zones blanches ou noires, les zones blanches représentant les crètes et les zones blanche les vallées entre les crètes, et est donc particulièrement claire et lisible.

L'image binaire peut être vue comme une carte de caractéristiques « intermédiaires » de l'empreinte digitale d'entrée (features map). On note qu'il est connu de binariser une image d'empreinte digitale en tant que « pré-traitement » par des algorithme de traitement de l'image, mais il a été découvert qu'il était possible de réaliser cette binarisation de façon très efficace avec des réseaux de neurones de taille limitée répondant aux contraintes d'un embarquement sur un équipement grand public tel qu'un smartphone.

Plus précisément, binariser l'image facilite considérablement les traitements ultérieurs pour extraire les caractéristiques recherchées de l'empreinte (et donc limite les ressources nécessaires) tout en étant facilement embarquable comme il va être montré. Ainsi, on peut obtenir un codeur complet embarqué ayant les mêmes performances que les codeurs connus.

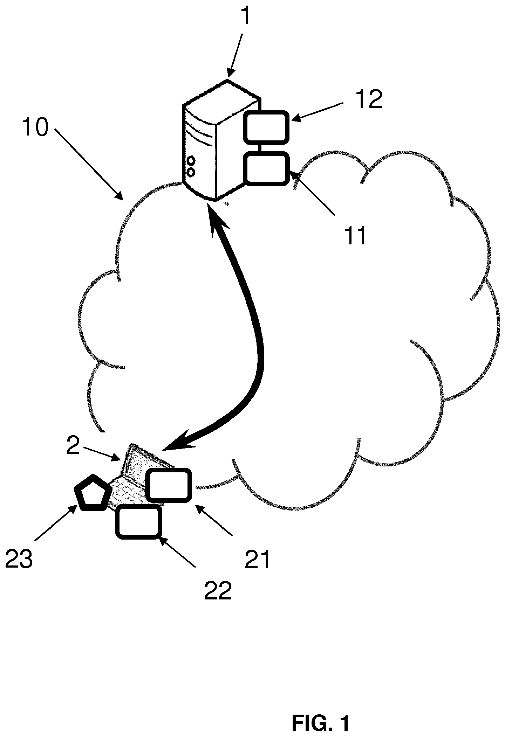

Le présent procédé est mis en œuvre au sein d'une architecture telle que représentée par la **figure 1**, grâce à un serveur 1 et un client 2. Le serveur 1 est l'équipement d'apprentissage (mettant en œuvre l'apprentissage du CNN) et le client 2 est un équipement de classification (mettant en œuvre le présent procédé d'extraction de caractéristiques recherchées d'une empreinte digitale), par exemple un terminal d'un utilisateur.

Il est tout à fait possible que les deux équipements 1, 2 soient confondus, mais de façon préférée le serveur 1 est celui d'un fournisseur de solution de sécurité, et le client 2 un équipement grand public personnel, notamment un smartphone, un ordinateur personnel, une tablette tactile, un coffre-fort, etc.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple une mémoire flash ou un disque dur.

Le serveur 1 stocke une base de données d'apprentissage, i.e. un ensemble d'images d'empreintes digitales pour lesquelles on dispose déjà d'une image binarisée (et éventuellement d'autres informations comme des cartes RFM, voir plus loin) par opposition aux images dites d'entrée que l'on cherche justement à traiter.

L'équipement client 2 comprend avantageusement un scanner d'empreintes digitales 23, de sorte à pouvoir directement acquérir ladite image d'entrée, typiquement pour qu'un utilisateur puisse s'authentifier.

*CNN*

Un CNN contient généralement quatre types de couches traitant successivement l'information :

- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente (pour de la classification).

Les couches non-linéaires sont souvent précédées d'une couche de normalisation en batch (« couche *BN* » pour batch normalization) avant chaque couche non-linéaire NL, de sorte à accélérer l'apprentissage.

La fonction d'activation de couche non linéaire NL est typiquement la fonction *ReLU* (Rectified Linear Unit, i.e. Unité de Rectification Linéaire) qui est égale à $f(x) = max(0, x)$ et la couche de pooling (noté *POOL)* la plus utilisée est la fonction *AvgPool* qui correspond à une moyennes entre les valeurs d'un carré (on met en commun plusieurs valeurs en une seule).

La couche de convolution, notée *CONV,* et la couche entièrement connectée, notée FC, correspondent généralement à un produit scalaire entre les neurones de la couche précédente et les poids du CNN.

Les architectures typiques de CNN empilent quelques paires de couches *CONV → NL* puis ajoutent une couche POOL et répètent ce schéma $[(CONV → NL)^p → POOL]$ jusqu'à obtenir un vecteur de sortie de taille suffisamment petite, puis terminent par deux couches entièrement connectées FC.

Voici une architecture CNN typique :

$$INPUT → [[CONV → NL]^p → POOL]^n → FC → FC$$

Dans le présent CNN, on comprend qu'aucune couche FC n'est nécessaire dans la mesure où le résultat attendu n'est pas une classe, mais l'image binaire, qui est une carte de caractéristiques.

De façon générale, ledit CNN comprend un ensemble de couches de convolution successives. De façon connue et comme expliquée avant, chacune desdites couches de convolution peut être suivie d'une couche de normalisation en batch *BN* et/ou d'une couche non-linéaire, en particulier *ReLU,* préférentiellement les deux dans cet ordre.

De sorte à réaliser la binarisation, ledit ensemble de couches de convolution successives présente une taille de filtre décroissante et un nombre de filtres décroissants. La décroissance de la taille de filtre permet ainsi une fusion de l'image par réduction itérative. Ledit ensemble est comme l'on verra disposé à la « fin » du CNN, c'est-à-dire au niveau de sa sortie : la dernière couche de convolution dudit ensemble présente avantageusement une taille de filtre $1×1$ et génère en sortie ladite image binaire.

On rappelle en effet qu'une couche de convolution est définie par un ensemble de filtres (ou « kernels ») mis en œuvre sur un bloc de l'entrée, i.e. une sous-surface. Le nombre des filtres mis en œuvre définit la taille du vecteur de sortie, et la taille de ces filtres définit l'étendue de la surface considérée. L'utilisation de filtres de grande dimension permet de considérer un voisinage assez large mais augmente de façon exponentielle l'empreinte mémoire, c'est pourquoi il est nécessaire de conserver un équilibre.

Ainsi, la convolution finale de taille de filtre $1\times1$ permet de fusionner l'information multidimensionnelle issue des couches précédentes en une carte de caractéristiques de dimension 1 qui constitue l'image binaire.

A noter que cette dernière couche de convolution peut présenter un unique filtre, i.e. ne générer que l'image binaire, ou présenter un deuxième filtre de sorte à générer en outre un masque de confiance associé à ladite image binaire.

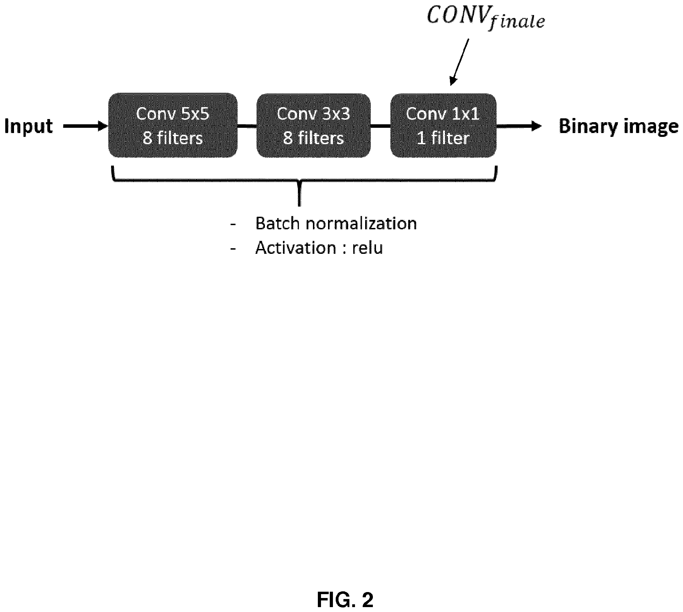

La **figure 2** représente une première possibilité de CNN de binarisation présentant une taille et une empreinte mémoire minimale.

Ledit CNN est en effet réduit audit ensemble de couches de convolution successives, et comprend deux couches de convolution « de tête » créant de la profondeur.

La première couche de convolution présente huit filtres d'une taille $5\times5$, la deuxième couche de convolution présente huit filtres d'une taille $3\times3$, et la dernière couche de convolution notée $CONV_{finale}$ (la troisième) présente un filtre d'une taille $1\times1$.

On voit ainsi qu'on a un nombre de filtres constant à huit, avant de tomber à un, c'est-à-dire que c'est en pratique seulement la dernière couche $CONV_{finale}$ qui permet la binarisation (et n'a pas d'autres sorties).

Ce CNN est très intéressant au vu de sa taille particulièrement réduite, mais si l'on souhaite améliorer la qualité, il est préférable d'avoir un nombre de filtres strictement décroissant sur l'ensemble, i.e. une diminution progressive du nombre de filtres.

*Décompaction*

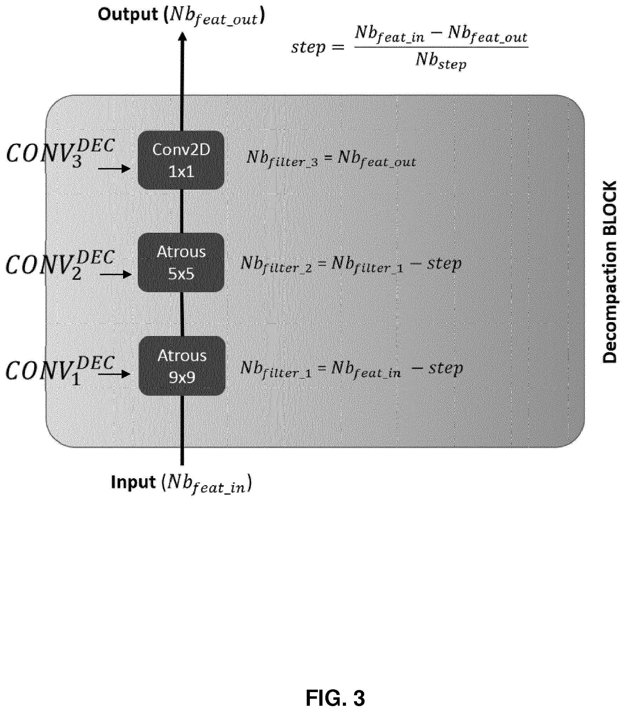

Ainsi, en référence à la **figure 3,** en lieu est place de la dernière couche de convolution $CONV_{finale}$ assurant seule la binarisation, on prévoit un bloc dit de « décompaction » qui en contient une pluralité (notées $CONV_i^{DEC}$, $i \in$ [1;n], n $\geq$ 2, c'est-à-dire au moins deux couches de convolution successives, avantageusement trois, DEC signifiant « décompaction »).

Le nombre de filtres diminue d'un pas constant d'une couche de convolution $CONV_i^{DEC}$ du bloc de décompaction à la suivante $CONV_{i+1}^{DEC}$. La dernière couche $CONV_n^{DEC}$ du bloc de décompaction a de façon préférée une taille de filtre $1\times1$ comme la couche de convolution finale $CONV_{finale}$ présentée ci-avant, mais la réduction progressive de la taille de filtre permet de d'éviter la perte d'information et donc de diminuer le bruit. La qualité de la binarisation est ainsi sensiblement améliorée.

Dans le bloc de décompaction, on définit le nombre de cartes de caractéristiques en entrée du bloc $NB_{feat\_in}$, le nombre de cartes de caractéristiques en sortie du bloc $NB_{feat\_out}$, et le nombre de couches de convolutions dans le bloc $NB_{step}$ (qui correspond à n tel que défini précédemment). Ledit pas constant *step* est alors défini par la formule

$$step = \frac{NB_{feat\_in} - NB_{feat\_out}}{NB_{step}}.$$

Par exemple, en définissant que l'on a trois couches dans le bloc comme dans l'exemple de la figure 3, que le nombre de cartes de caractéristiques en sortie est deux (comme expliqué, image binaire et masque de confiance), et que le nombre de cartes de caractéristiques en entrée est huit (comme en sortie de la deuxième couche de convolution du CNN de la figure 2), alors on obtient *step* = 2, c'est-à-dire que la première couche de convolution $CONV_1^{DEC}$ du CNN de la figure 3 présente six filtres, la deuxième couche de convolution $CONV_2^{DEC}$ du CNN de la figure 3 présente quatre filtres, et comme prévu la troisième couche de convolution (finale) $CONV_3^{DEC}$ du CNN de la figure 3 présente deux filtres.

Dans les zones de l'image d'entrée de plus faible qualité, on constate que le bloc de décompaction permet de prendre en compte une information spatiale plus étendue et d'ainsi proposer une segmentation continue. Pour la même raison, lorsqu'une zone d'occlusion existe dans l'image, la décompaction permet de retrouver une connectivité entre les crêtes et vallées aux bords de cette région sans information.

On note qu'il est tout à fait possible qu'il y ait d'autres couches de convolution dans le CNN, en particulier en amont et/ou en parallèle du bloc de décompaction.

*Convolutions Atrous*

Avantageusement, comme l'on voit dans la figure 3, au moins une couche de convolution du bloc de décompaction autre que la dernière, i.e. $CONV_i^{DEC}$, $i \in [1; n\text{-}1]$, est de type à filtre dilaté, dit Atrous.

En effet, pour proposer une binarisation de qualité d'une empreinte digitale, il est nécessaire de pouvoir discerner les différences existant entre une vallée et un pli de peau ou une cicatrice présent sur le doigt de l'utilisateur.

Cette prise de décision implique nécessairement l'utilisation d'une information consolidée sur un voisinage assez large, et on en revient à l'intérêt des filtres de grande taille, présentant malheureusement une forte empreinte mémoire.

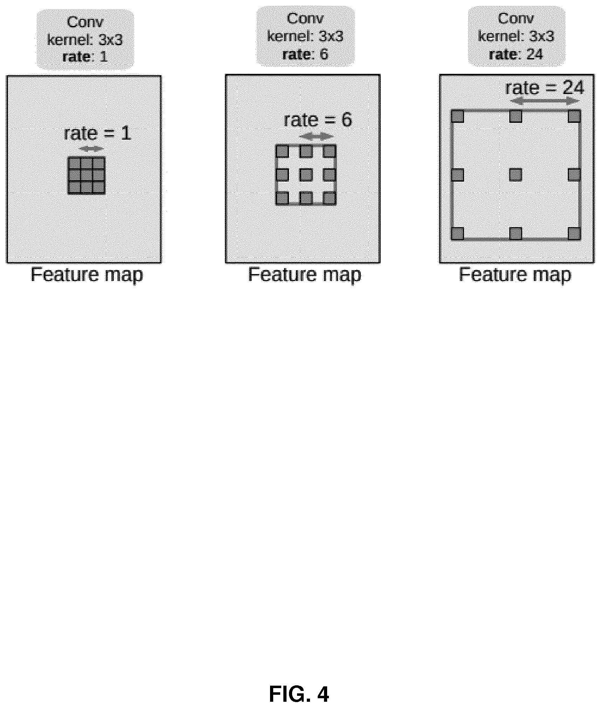

L'utilisation de couches de convolutions Atrous (voir par exemple le document Chen, L. C., Papandreou, G., Schroff, F., & Adam, H. (2017). Rethinking atrous convolution for semantic image segmentation. arXiv preprint arXiv:1706.05587., dont est extrait la **figure 4)** permet de lever cette limitation. En partant d'un filtre de taille réduite - par exemple 3×3 - il est possible d'étendre le champ de vision de celui-ci en répartissant les coefficients utilisés selon un espacement sélectionné, voir la figure 4. Cela peut aussi être vu comme l'utilisation d'un filtre parcimonieux de la dimension finale.

Pour reformuler, alors que dans une convolution « normale » i.e. à filtre non dilaté, la taille du champ de vision et la taille du filtre coïncident, alors que dans une convolution Atrous, i.e. à filtre dilaté, la taille du champ de vision est supérieure à la taille du filtre du fait de l'espacement entre les pixels considérés.

En particulier, quelle que soit la taille du champ de vision on peut garder une taille de filtre raisonnable entre 3x3 et 7x7 compatible avec l'embarquement sur un équipement grand public.

Et de façon préférée, chaque autre couche de convolution $CONV_i^{DEC}$, $\forall i \in [1; n\text{-}1]$ dudit bloc de décompaction est de type à filtre dilaté, dit Atrous (i.e. seule la dernière est une convolution « normale », à noter qu'une couche de convolution à filtre de taille 1×1 ne peut pas être Atrous, la taille du champ de vision étant nécessairement également 1×1), avec une taille de champ de vision décroissante.

Dans l'exemple de la figure 3, les première et deuxième couche de convolution, ainsi de type Atrous, présentent chacune une taille de filtre 3×3, mais leur taille de champ de vision est respectivement 9×9 et 5×5.

*Inception*

Un problème que l'on rencontre en extraction de caractéristiques d'empreintes digitales est la déformation des doigts. Pour que le CNN soit robuste à cette déformation, il est souhaitable qu'il puisse gérer différentes résolutions correspondant à différents niveaux de zoom.

L'introduction d'une telle composante « multi-résolution » est une possibilité offerte par des blocs dits Inception constitutifs du réseau du même nom décrit par exemple dans le document Szegedy, C., Liu, W., Jia, Y., Sermanet, P., Reed, S., Anguelov, D., ... & Rabinovich, A. (2015, June). Going deeper with convolutions. Cvpr., auquel l'homme du métier pourra se référer.

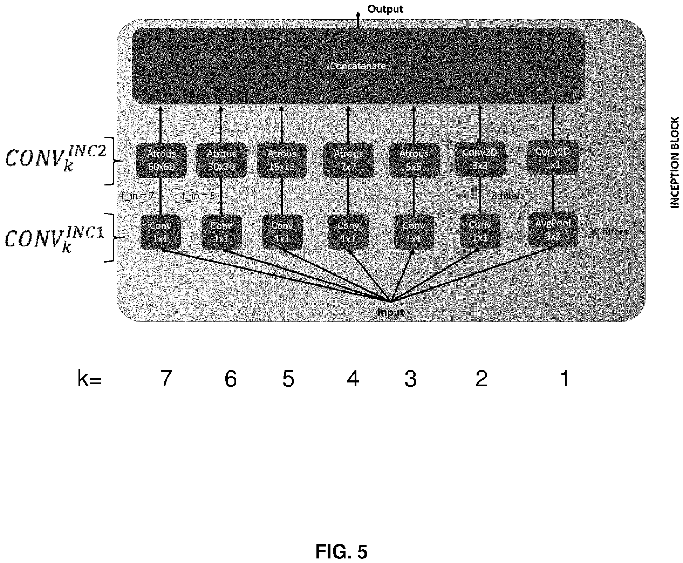

Ainsi, le présent CNN comprend avantageusement un tel bloc Inception dont un mode de réalisation avantageux est représenté par la **figure 5.**

Un bloc dit Inception présente une pluralité de branches parallèles avec des couches de convolution $CONV_k^{INC2}$, $k \in [1; l]$, $l \geq 2$ présentant des tailles de champ de vision différentes, les différentes branches apportant de l'information à chacune des échelles. Dans l'exemple de la figure 4, on a l = 7, et les tailles de champ de vision suivantes (dans l'ordre des branches) : 1x1, 3x3, 5x5, 7x7, 15x15, 30x30, 60x60.

A la fin du bloc Inception un module de concaténation accumule les cartes de caractéristiques des différentes branches.

De façon préférée chaque branche présente deux couches, dont une couche de convolution 1×1 (normalement en entrée, on verra plus loin le cas particulier de la première branche, i.e. k = 1).

Ainsi, au moins une branche du bloc Inception (préférentiellement toutes sauf une ou deux, présentement l'ensemble des branches k $\in$ [3; l]) comprend une couche de convolution $CONV_k^{INC1}$ présentant une taille de filtre 1×1, puis une couche de convolution $CONV_k^{INC2}$ de type à filtre dilaté, dit Atrous, à nouveau avec une taille de filtre entre 3×3 et 7×7. Plus précisément, toutes les couches de convolution Atrous avec une taille de champ jusqu'à 15×15 (celles des 3e, 4e et 5e branches) peuvent présenter une taille de filtre de 3×3, mais au-delà (cas de la 6e branche où la couche de convolution $CONV_6^{INC2}$ présente une taille de champ de vision 30x30 et de la 7e branche où la couche de convolution $CONV_7^{INC2}$ présente une taille de champ de vision de 60x60), on prend préférentiellement des tailles de filtres respectivement de 5x5 et 7x7 pour conserver un espacement raisonnable entre deux coefficients du filtre, assurant une réelle utilisation de l'information comprise dans le champ de vision étendu, tout en gardant une empreinte mémoire limitée compatible avec l'embarquement sur les dispositifs grand public.

Par ailleurs, une branche du bloc Inception peut comprendre une couche de convolution $CONV_2^{INC1}$ présentant une taille de filtre 1×1, puis une couche de convolution $(CONV_2^{INC2})$ à filtre non-dilaté de taille 3×3 ; et/ou une branche du bloc Inception comprend une couche de pooling $POOL_1^{INC1}$, puis une couche de convolution $CONV_1^{INC2}$ présentant une taille de filtre 1×1. Dans l'exemple de la figure 5, il y a les deux.

La 2e branche correspond à une taille de champ de vision de taille 3×3, i.e. la taille de filtre est obligée de coïncider avec la taille de champ de vision, d'où le fait que la convolution soit normale et non Atrous.

La première branche correspond à un champ de vision de taille 1×1, i.e. une taille de filtre de 1×1. Cette branche pourrait ne comprendre que la couche de convolution 1×1, mais de façon préférée elle est mise en 2e position et précédée par une couche de pooling (typiquement AveragePooling 3×3, i.e. un moyennage sur un carré de taille 3×3) de façon à augmenter l'information de cette branche.

Chaque couche de convolution $CONV_k^{INC1,2}$ peut présenter un nombre de filtre relativement élevé, par exemple 32, pour créer de la profondeur. Dans l'exemple de la figure 5, la couche de convolution $(CONV_2^{INC2})$ à filtre non-dilaté de taille 3×3 présente par exception 48 filtres, du fait de l'intérêt de l'information qu'elle encode (c'est la dernière convolution « non Atrous », i.e. qui a accès à toute l'information de manière non parcellaire). L'homme du métier saura adapter le nombre de filtres en fonction des contraintes en particulier d'empreinte mémoire à respecter.

*Exemple de CNN*

De façon préférée, le CNN comprend successivement le ou les blocs Inception (préférentiellement deux) puis le bloc de décompaction.

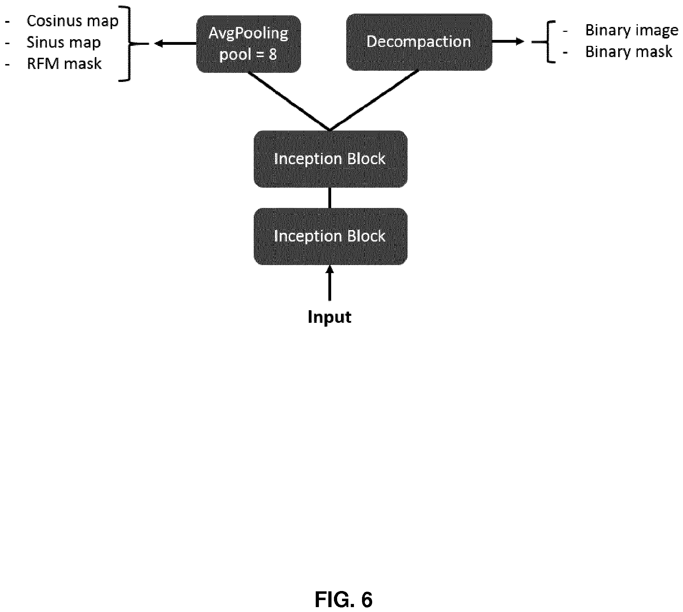

Dans un mode de réalisation particulièrement préféré, illustré par la **figure 6**, le CNN comprend en parallèle du bloc de décompaction un bloc dit de spécialisation générant d'autres cartes utiles, et en particulier au moins une carte d'orientation de crètes de l'empreinte digitale représentée par ladite image d'entrée, dite carte RFM, et le cas échéant le masque de confiance associé. Plus précisément, la branche produit une carte de sinus et une carte de cosinus, encodant à elles deux la RFM.

En effet, les cartes RFM ont généralement une résolution inférieure à l'image d'entrée ou l'image binaire (e.g un huitième), et la séparation en deux branches permet d'intégrer cette différence de résolution et de permettre une spécification de l'apprentissage pour les différentes cartes considérées.

On a donc un « tronc commun » constitué des blocs Inception, puis deux branches, la branche de spécialisation (i.e. le bloc de spécialisation) et la branche de binarisation (i.e. le bloc de décompaction)

Dans l'exemple de la figure 6, le bloc de décompaction est constitué d'une couche de pooling (e.g. Average-Pooling 8×8 de sorte à diviser la résolution par huit).

Un tel réseau s'avère particulièrement intéressant du fait de son aptitude à produire à la fois l'image binaire et la carte RFM, pour une taille raisonnable.

*Apprentissage et classification*

Avantageusement, le procédé commence par une étape (a0) d'apprentissage, par les moyens de traitement de données 11 du serveur 1, à partir d'une base d'images d'empreintes digitales déjà binarisées, de paramètres dudit CNN.

Cet apprentissage peut être réalisé de façon classique, par exemple en utilisant le framework Keras. La fonction de coût d'apprentissage peut être composée d'une attache aux données classique — erreur quadratique moyenne — et d'une régularisation par variation totale.

A noter que ladite base d'images d'empreintes digitales déjà binarisées peut être construite en utilisant un algorithme connu de binarisation (par exemple par rehaussement de contraste), et similairement pour le masque de confiance. Par ailleurs, de façon classique, des algorithmes d'augmentations peuvent être mis en œuvre de sorte à démultiplier la taille de la base d'apprentissage, pour assurer la robustesse du CNN à des défauts d'acquisition usuels.

Dans le cas où le CNN présente une branche de spécialisation, celle-ci peut être entraînée si l'on dispose également pour chaque empreinte de ladite base de données de la carte d'orientation correspondante (le cas échéant à nouveau en utilisant un algorithme connu).

Le CNN appris peut être stocké le cas échéant sur des moyens de stockage de données 22 du client 2 pour utilisation en binarisation. A noter que le même CNN peut être embarqué sur de nombreux clients 2, un seul apprentissage est nécessaire.

Dans une étape (a) principale, ladite image d'entrée est binarisée par les moyens de traitement de données 21 du client 2 au moyen du CNN embarqué, de sorte à générer l'image binaire.

Ensuite, dans une étape (b), ladite image binaire peut être traitée de sorte à extraire lesdites caractéristiques recherchées de l'empreinte digitale représentée par ladite image d'entrée, lesquelles peuvent notamment comprendre la position et/ou l'orientation de minuties.

De façon préférée, le procédé comprend en outre une étape (c) d'identification ou d'authentification dudit individu par comparaison des caractéristiques recherchées extraites de l'empreinte digitale représentée par ladite image d'entrée, avec les caractéristiques d'empreintes digitales de référence, qui pourra être mise en œuvre de n'importe quelle façon connue de l'homme du métier.

Par exemple, le client 2 peut stocker les caractéristiques des empreintes d'un ou plusieurs utilisateurs autorisés comme empreintes de référence, de sorte à gérer le déverrouillage de l'équipement client 2 (en particulier dans le cas d'une image d'entrée acquise directement par un scanner 23 intégré) : si les caractéristiques extraites correspondent à celles attendues d'un utilisateur autorisé, les moyens de traitement de données 21 considèrent que l'individu qui tente de s'authentifier est autorisé, et procèdent au déverrouillage.

Alternativement, le client 2 peut envoyer les caractéristiques extraites à une base de données distante desdites caractéristiques d'empreintes digitales de référence, pour identification de l'individu

Différents tests du présent procédé ont été mis en œuvre. Une base d'images d'empreintes acquises à une résolution de 500dpi a été constituée. 90% des images sont dédiées à l'apprentissage, 10% à l'évaluation. L'image en entrée du réseau est un patch sélectionné dans une zone aléatoire de l'image pleine résolution.

Un premier test compare pour des exemples d'images d'entrée, les images binaires correspondantes prédéterminées et les images binaires obtenues par la mise en œuvre du CNN minimal de la figure 2.

Les résultats obtenus sont de bonne qualité, la démarcation crête/vallée obtenue est franche et la normalisation TV permet de garantir une bonne homogénéité pour chacune de ces catégories. On constate néanmoins un léger déséquilibre de répartition entre vallées et crêtes. Par ailleurs, il apparaît que le CNN minimal connecte parfois par erreur des crêtes (cicatrices/plis de peau peuvent être considéré la plupart du temps comme des crêtes).

Dans un deuxième test utilisant cette fois le CNN préféré de la figure 6, sont comparés pour les exemples d'image d'entrée, d'une part les images binaires correspondantes prédéterminées et les images binaires obtenues, et d'autre part les masques de confiance correspondant prédéterminés et les masques de confiance obtenus.

L'approche multi-résolution combinée avec l'utilisation de filtres de plus grandes dimensions permet d'assurer une bonne continuité de la segmentation au niveau du pli de peau, et on constate une répartition équilibrée entre vallées et crêtes, ainsi qu'une robustesse aux cicatrices.

D'autres tests ont montré que dans les zones de plus faible qualité, le bloc de décompaction permet de prendre en compte une information spatiale plus étendue et d'ainsi proposer une segmentation continue. Pour la même raison, lorsqu'une zone d'occlusion existe dans l'image, la décompaction permet de retrouver efficacement une connectivité entre les crêtes et vallées aux bords de cette région sans information.

Par ailleurs, l'adéquation observée pour la branche de binarisation est confirmée sur la branche de spécialisation (dédiée aux cartes d'orientation telle que la RFM).

*Produit programme d'ordinateur*

Selon un deuxième et un troisième aspects, l'invention concerne un produit programme d'ordinateur comprenant des instructions de code pour l'exécution (en particulier sur les moyens de traitement de données 11, 21 du serveur 1 et/ou du client 2) d'un procédé d'extraction de caractéristiques recherchées d'une empreinte digitale représentée par une image d'entrée, ainsi que des moyens de stockage lisibles par un équipement informatique (une mémoire 12, 22 du serveur 1 et/ou du client 2) sur lequel on trouve ce produit programme d'ordinateur.

**Revendications**

1. Procédé d'extraction de caractéristiques recherchées d'une empreinte digitale représentée par une image d'entrée, le procédé comprenant la mise en œuvre, par des moyens de traitement de données (21) d'un client (2), d'étapes de :

(a) Binarisation de ladite image d'entrée au moyen d'un réseau de neurones à convolution, CNN, de sorte à générer une image dite binaire, ledit CNN comprenant un bloc, dit de décompaction, de couches de convolution successives ( $CONV_i^{DEC}$ , $i \in [1; n]$, $n \geq 2$) présentant une taille de filtre décroissante et un nombre de filtres décroissant, tel que le nombre de filtres diminue d'un pas constant d'une couche de convolution $(CONV_i^{DEC})$ du bloc de décompaction à la suivante $(CONV_{i+1}^{DEC})$ ;

(b) Traitement de ladite image binaire de sorte à extraire lesdites caractéristiques recherchées de l'empreinte digitale représentée par ladite image d'entrée.

2. Procédé selon la revendication 1, dans lequel la dernière couche de convolution $(CONV_n^{DEC})$ dudit bloc de décompaction présente une taille de filtre 1×1 et génère en sortie ladite image binaire.

3. Procédé selon la revendication 2, dans lequel au moins une autre couche de convolution dudit bloc de décompaction est de type à filtre dilaté, dit Atrous, avec une taille de filtre entre 3×3 et 7×7.

4. Procédé selon la revendication 3, dans lequel chaque autre couche de convolution dudit bloc de décompaction est de type à filtre dilaté, dit Atrous, avec une taille de champ de vision décroissante.

5. Procédé selon l'une des revendications 2 à 4, dans lequel la dernière couche de convolution $(CONV_n^{DEC})$ dudit bloc de décompaction génère en outre un masque de confiance associé à ladite image binaire.

6. Procédé selon l'une des revendications 1 à 5, dans lequel ledit CNN comprend au moins un bloc dit Inception présentant une pluralité de branches parallèles avec des couches de convolution ( $CONV_k^{INC2}$ , $k \in [1; l]$, $l \geq 2$) présentant des tailles de champ de vision différentes.

7. Procédé selon la revendication 6, dans lequel au moins une branche du bloc Inception comprend une couche de convolution $(CONV_k^{INC1})$ présentant une taille de filtre 1×1, puis une couche de convolution $(CONV_k^{INC2})$ de type à filtre dilaté, dit Atrous, avec une taille de filtre entre 3×3 et 7×7.

8. Procédé selon l'une des revendication 6 et 7, dans lequel une branche du bloc Inception comprend une couche de convolution $(CONV_2^{INC1})$ présentant une taille de filtre 1x1, puis une couche de convolution $(CONV_2^{INC2})$ à filtre non-dilaté de taille 3x3 ; et/ou une branche du bloc Inception comprend une couche de pooling $(POOL_1^{INC1})$ , puis une couche de convolution $(CONV_1^{INC2})$ présentant une taille de filtre 1×1.

9. Procédé selon l'une des revendications 6 à 8, dans lequel le CNN comprend successivement le ou les blocs Inception puis le bloc de décompaction.

10. Procédé selon la revendication 9, dans lequel le CNN comprend en parallèle du bloc de décompaction un bloc dit de spécialisation générant au moins une carte d'orientation de crètes de l'empreinte digitale représentée par ladite image d'entrée, dite carte RFM, ladite carte RFM étant également traitée dans l'étape (b).

11. Procédé selon l'une des revendications 1 à 10, comprenant une étape (a0) préalable d'apprentissage, par des moyens de traitement de données (11) d'un serveur (1), à partir d'une base d'images d'empreintes digitales déjà binarisées, de paramètres dudit CNN.

12. Procédé selon l'une des revendications 1 à 11, dans lequel lesdites caractéristiques recherchées à extraire de l'empreinte digitale représentée par ladite image d'entrée comprennent la position et/ou l'orientation de minuties.

13. Procédé selon l'une des revendications 1 à 12, dans lequel ladite empreinte digitale représentée par l'image d'entrée est celle d'un individu, le procédé comprenant en outre une étape (c) d'identification ou d'authentification dudit individu par comparaison des caractéristiques recherchées extraites de l'empreinte digitale représentée par ladite image d'entrée, avec les caractéristiques d'empreintes digitales de référence.

14. Produit programme d'ordinateur comprenant des instructions de code pour l'exécution d'un procédé selon l'une des revendications 1 à 13 d'extraction de caractéristiques recherchées d'une empreinte digitale représentée par une image d'entrée, lorsque ledit programme est exécuté sur un ordinateur.

15. Moyen de stockage lisible par un équipement informatique sur lequel un produit programme d'ordinateur comprend des instructions de code pour l'exécution d'un procédé selon l'une des revendications 1 à 13 d'extraction de caractéristiques recherchées d'une empreinte digitale représentée par une image d'entrée.

**Patentansprüche**

1. Verfahren zum Extrahieren gewünschter Merkmale aus einem Fingerabdruck, der durch ein Eingabebild repräsentiert wird, wobei das Verfahren, mit der Umsetzung durch Datenverarbeitungsmittel (21) eines Kunden (2), die Etappen umfasst:

    (a) Binarisierung des Eingangsbildes mittels eines Convolutional Neural Networks, CNN, um ein Binärbild zu erzeugen, wobei das CNN einen Dekomprimierungsblock aufeinanderfolgender Convolutional Layer ($CONV_i^{DEC}$, $i \in [1; n]$, $n \geq 2$) mit abnehmender Filtergröße aufweist und eine abnehmende Anzahl von Filtern, so dass die Anzahl der Filter um einen konstanten Schritt eines Convolutional Layers $(CONV_i^{DEC})$ des Dekomprimierungsblocks zum nächsten $(CONV_{i+1}^{DEC})$ abnimmt;
    (b) Verarbeiten des Binärbildes, um die gewünschten Merkmale aus dem durch das Eingabebild repräsentierten Fingerabdruck zu extrahieren.

2. Verfahren nach Anspruch 1, wobei der letzte Convolutional Layer $(CONV_n^{DEC})$ des Dekomprimierungsblocks eine 1×1-Filtergröße aufweist und am Ausgang das Binärbild erzeugt.

3. Verfahren nach Anspruch 2, wobei mindestens ein anderer Convolutional Layer des Dekomprimierungsblocks vom Typ expandierter Filter ist, der Atrous, mit einer Filtergröße zwischen 3×3 und 7×7.

4. Verfahren nach Anspruch 3, wobei jeder andere Convolutional Layer des Dekomprimierungsblocks vom Typ expandierter Filter ist, der Atrous, mit abnehmender Sichtfeldgröße.

5. Verfahren nach einem der Ansprüche 2 bis 4, wobei der letzte Convolutional Layer $(CONV_n^{DEC})$ des Dekomprimierungsblocks ferner eine Vertrauensmaske erzeugt, die dem Binärbild zugeordnet ist.

6. Verfahren nach einem der Ansprüche 1 bis 5, wobei das CNN mindestens einen Inception-Block umfasst, der mehrere parallele Zweige mit Convolutional Layern ($CONV_k^{INC2}$, $k \in [1; l]$, $l \geq 2$) mit unterschiedlichen Sichtfeldgrößen aufweist.

7. Verfahren nach Anspruch 6, wobei mindestens ein Zweig des Inception-Blocks einen Convolutional Layer $(CONV_k^{INC1})$ mit einer Filtergröße von 1×1 aufweist und dann einen Convolutional Layer $(CONV_k^{INC2})$ des Typs erweiterter Filter, der Atrous, mit einer Filtergröße zwischen 3x3 und 7x7.

8. Verfahren nach einem der Ansprüche 6 und 7, bei dem ein Zweig des Inception-Blocks einen Convolutional Layer $(CONV_2^{INC1})$ mit einer Filtergröße von 1×1 aufweist, dann einen Convolutional Layer $(CONV_2^{INC2})$ mit einem nicht erweiterten Filter der Größe 3×3; und/oder einen Zweig des Inception-Blocks, der einen Pooling Layer $(POOL_1^{INC1})$ umfasst und dann einen Convolutional Layer $(CONV_1^{INC2})$ mit einer Filtergröße von 1x1.

9. Verfahren nach einem der Ansprüche 6 bis 8, bei dem das CNN aufeinanderfolgend den Inception-Block oder die Inception-Blöcke umfasst und dann den Dekomprimierungsblock.

10. Verfahren nach Anspruch 9, bei dem das CNN parallel zum Dekomprimierungsblock einen Spezialisierungsblock umfasst, der mindestens eine Karte, die RFM-Karte, der Ausrichtungen der Rippen des Fingerabdrucks erzeugt, die durch das Eingabebild repräsentiert werden, wobei die RFM-Karte ebenfalls in der Etappe (b) verarbeitet wird.

11. Verfahren nach einem der Ansprüche 1 bis 10, umfassend eine vorausgehende Lernetappe (a0) durch die Parameter des CNN mit Datenverarbeitungsmitteln (11) eines Servers (1) auf einer Basis von Bildern von bereits binärisierten Fingerabdrücken.

12. Verfahren nach einem der Ansprüche 1 bis 11, wobei die gewünschten Merkmale, die aus dem durch das Eingabebild repräsentierten Fingerabdruck extrahiert werden sollen, die Position und/oder die Ausrichtung der Details umfassen.

13. Verfahren nach einem der Ansprüche 1 bis 12, wobei der durch das Eingabebild repräsentierte Fingerabdruck, der eines Individuums ist, wobei das Verfahren ferner eine Etappe (c) des Identifizierens oder Authentifizierens des Individuums durch Vergleichen der gewünschten Merkmale umfasst, die aus dem Fingerabdruck extrahiert wurden, der durch das Eingabebild repräsentiert wird, mit den Merkmalen der Referenz-Fingerabdrücke.

14. Computerprogrammprodukt mit Codeanweisungen zum Ausführen eines Verfahrens nach einem der Ansprüche 1 bis 13 zum Extrahieren gewünschter Merkmale aus einem Fingerabdruck, der durch ein Eingabebild repräsentiert wird, wenn das Programm auf einem Computer ausgeführt wird.

15. Speichermedium durch eine Computerausrüstung lesbar, auf dem ein Computerprogrammprodukt Codeanweisungen zur Ausführung eines Verfahrens nach einem der Ansprüche 1 bis 13 zum Extrahieren gewünschter Merkmale aus einem durch ein Eingabebild repräsentierten Fingerabdruck umfasst.

**Claims**

1. A method for extracting features of interest from a fingerprint represented by an input image, the method comprising the implementation, by data processing means (21) of a client (2), of steps of:

(a) Binarisation of said input image by means of a convolutional neural network, CNN, so as to generate a so-called binary image, said CNN comprising a so-called decompaction block of successive convolution layers ( $CONV_i^{DEC}$ , $i \in [1; n]$, $n \geq 2$) having a decreasing filtre size and a decreasing number of filtres, such that the number of filtres decreases by a constant step from one convolution layer $(CONV_i^{DEC})$ of the decompaction block to the next one $(CONV_{i+1}^{DEC})$ ;
(b) Processing said binary image so as to extract said features of interest from the fingerprint represented by said input image.

2. The method according to claim 1, wherein the last convolution layer $(CONV_n^{DEC})$ of said decompaction block has a $1 \times 1$ filtre size and generates in output said binary image.

3. The method according to claim 2, wherein at least one other convolution layer of said decompaction block is of the dilated filtre type, called Atrous, with a filtre size between $3 \times 3$ and $7 \times 7$.

4. The method according to claim 3, wherein each other convolution layer of said decompaction block is of the dilated filtre type, called Atrous, with a decreasing field of vision size.

5. The method according to one of claims 2 to 4, wherein the last convolution layer $(CONV_n^{DEC})$ of said decompaction block further generates a mask of confidence associated with said binary image.

6. The method according to one of claims 1 to 5, wherein said CNN comprises at least one so-called Inception block having a plurality of parallel branches with convolution layers ( $CONV_k^{INC2}$ , $k \in [1; l]$, $l \geq 2$) having different field of vision sizes.

7. The method according to claim 6, wherein at least one branch of the Inception block comprises a convolution layer

$\left(CONV_k^{INC1}\right)$ having a 1x1 filtre size, then a convolution layer $\left(CONV_k^{INC2}\right)$ of the dilated filtre type, called Atrous, with a filtre size between 3×3 and 7×7.

8. The method according to one of claims 6 and 7, wherein one branch of the Inception block comprises a convolution layer $\left(CONV_2^{INC1}\right)$ having a 1x1 filtre size, then a convolution layer $\left(CONV_2^{INC2}\right)$ with a 3×3 size non-dilated filtre; and/or a branch of the Inception block comprises a pooling layer $\left(POOL_1^{INC1}\right)$, then a convolution layer $\left(CONV_1^{INC2}\right)$ having a 1×1 filtre size.

9. The method according to one of claims 6 to 8, wherein the CNN successively comprises the Inception block(s) then the decompaction block.

10. The method according to claim 9, wherein the CNN comprises, in parallel with the decompaction block, a so-called specialisation block generating at least one map of orientation of ridges of the fingerprint represented by said input image, called RFM map, said RFM map also being processed in step (b).

11. The method according to one of claims 1 to 10, comprising a prior training step (a0), by data processing means (11) of a server (1), from a database of fingerprint images already binarised, from parameters of said CNN.

12. The method according to one of claims 1 to 11, wherein said features of interest to be extracted from the fingerprint represented by said input image comprise the position and/or orientation of minutia.

13. The method according to one of claims 1 to 12, wherein said fingerprint represented by the input image is that of an individual, the method further comprising a step (c) of identifying or authenticating said individual by comparison of features of interest extracted from the fingerprint represented by said input image, with the features of reference fingerprints.

14. A computer program product comprising code instructions for the execution of a method according to one of claims 1 to 13 for extracting features of interest from a fingerprint represented by an input image, when said program is executed on a computer.

15. A storage means readable by a computer equipment on which a computer program product comprises code instructions for the execution of a method according to one of claims 1 to 13 for extracting features of interest from a fingerprint represented by an input image.

**FIG. 1**

$CONV_{finale}$

Input → | Conv 5x5 8 filters | Conv 3x3 8 filters | Conv 1x1 1 filter | → Binary image

- Batch normalization
- Activation : relu

**FIG. 2**

**FIG. 3**

$$step = \frac{Nb_{feat\_in} - Nb_{feat\_out}}{Nb_{step}}$$

Output ($Nb_{feat\_out}$)

$CONV_3^{DEC}$ — Conv2D 1x1 — $Nb_{filter\_3} = Nb_{feat\_out}$

$CONV_2^{DEC}$ — Atrous 5x5 — $Nb_{filter\_2} = Nb_{filter\_1} - step$

$CONV_1^{DEC}$ — Atrous 9x9 — $Nb_{filter\_1} = Nb_{feat\_in} - step$

Decompaction BLOCK

Input ($Nb_{feat\_in}$)

FIG. 4

FIG. 5

- Cosinus map
- Sinus map
- RFM mask

AvgPooling
pool = 8

Decompaction

- Binary image
- Binary mask

Inception Block

Inception Block

**Input**

## FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JIAN LI et al.** Deep convolutional neural network for latent fingerprint enhancement. *SIGNAL PROCESSING. IMAGE COMMUNICATION,* 01 Février 2018, vol. 60, ISSN 0923-5965, 52-63

- **CHEN, L. C. ; PAPANDREOU, G. ; SCHROFF, F. ; ADAM, H.** *Rethinking atrous convolution for semantic image segmentation,* 2017
- **SZEGEDY, C. ; LIU, W. ; JIA, Y., ; SERMANET, P. ; REED, S. ; ANGUELOV, D. ; RABINOVICH, A.** Going deeper with convolutions. *Cvpr.,* Juin 2015